# FASCICULE DE BREVET EUROPEEN

(11) **EP 3 435 394 B1**
(45) Date de publication et mention de la délivrance du brevet: **12.02.2020**
(21) Numéro de dépôt: 18185505.7
(22) Date de dépôt: 25.07.2018
(51) Int. Cl.: H01H 9/34

(54) **DISPOSITIF DE FILTRAGE DE GAZ DE COUPURE ET APPAREIL DE COUPURE D'UN COURANT ÉLECTRIQUE COMPRENANT UN TEL DISPOSITIF DE FILTRAGE**
FILTERVORRICHTUNG VON SCHALTGAS, UND ABSCHALTGERÄT EINES ELEKTRISCHEN STROMS, DAS EINE SOLCHE FILTERVORRICHTUNG UMFASST
FILTERING DEVICE FOR SWITCHING GAS AND ELECTRIC CURRENT SWITCHGEAR COMPRISING SUCH A FILTERING DEVICE

(30) Priorité: 26.07.2017 FR 1757104
(43) Date de publication de la demande: 30.01.2019
(73) Titulaire: Schneider Electric Industries SAS, 92500 Rueil-Malmaison (FR)
(72) Inventeur: RIVAL, Marc, 38050 Grenoble Cedex 09 (FR); DOMENECH, Cyril, 38050 Grenoble Cedex 09 (FR); ROTA, Daniel, 38050 Grenoble Cedex 09 (FR)
(74) Mandataire: Lavoix

(56) Documents cités:
- EP-A2- 1 298 687
- CN-A- 102 129 924
- DE-A1-102007 028 204
- GB-A- 2 152 755

## Description

La présente invention concerne un dispositif de filtrage de gaz de coupure pour un appareil de coupure d'un courant électrique. L'invention concerne également un appareil électrique de coupure d'un courant électrique comprenant un tel dispositif de filtrage. Un dispositif de filtrage de gaz de coupure pour un appareil de coupure d'un courant électrique à contacts séparables et comportant une chambre de coupure d'un arc électrique selon la préambule de la revendication 1 est connu du document DE 10 2007 028204 A1.

On connaît des appareils électriques, tels que des disjoncteurs ou des contacteurs, qui permettent d'interrompre sélectivement la circulation d'un courant électrique au sein d'un circuit électrique, par exemple au sein d'un réseau de distribution électrique à usage domestique ou industriel.

Ces appareils de coupure comportent des contacts électriques séparables raccordés à des terminaux d'entrée et de sortie d'un courant électrique. Ces contacts électriques sont sélectivement déplaçables entre une position fermée, dans laquelle il autorise la circulation du courant électrique entre les terminaux et, alternativement, une position ouverte dans laquelle ils sont séparés l'un de l'autre afin d'empêcher la circulation de ce courant électrique.

Il est notamment connu que, lorsque ces contacts électriques sont déplacés vers leur position ouverte lorsqu'un courant électrique y circule, il peut se former un arc électrique entre ces deux contacts électriques. Cet arc électrique ionise l'air ambiant dans l'appareil, ce qui génère des gaz, dit gaz de coupure, qui sont ensuite rejetés vers l'extérieur de l'appareil. L'arc électrique est ensuite éteint au moyen d'une chambre de coupure d'arc au sein de l'appareil, afin d'interrompre la circulation du courant électrique.

Les gaz de coupure présentent une température élevée, typiquement supérieure à 4000°C et comprennent des particules telles que des suies qui proviennent généralement d'une fusion partielle de divers constituants internes de l'appareil sous l'action de l'arc électrique.

Le gaz de coupure doit donc être refroidi et déionisé, au moyen d'un dispositif de filtration dédié de l'appareil, avant d'être rejeté à l'extérieur. Cela permet notamment d'éviter un rebouclage du courant d'arc électrique à l'extérieur de l'appareil, par exemple entre les terminaux d'entrée et/ou de sortie et des pièces métalliques externes, par exemple au sein d'un tableau électrique, du fait de la conductivité électrique importante du gaz de coupure ionisé. Un tel rebouclage conduit à la formation d'un court-circuit, causant un défaut de sécurité inacceptable et dangereux.

Il existe des dispositifs de filtrage qui visent à refroidir les gaz de coupure avant leur sortie. Mais ces dispositifs de filtrage connus ne permettent pas, en plus de réduire la température, de réduire la pression des gaz de coupure lors de leur échappement.

Or, l'augmentation de pression générée lors des court-circuits par les appareils de coupure, notamment lors de l'interruption de courants présentant une forte puissance, pose un problème de sécurité notamment lorsque cet appareil est installé dans un milieu confiné, tel qu'une armoire électrique ou un coffret électrique. Dans ce cas, la surpression peut gravement endommager l'appareil électrique ainsi que les éléments se situant autour de celui-ci.

C'est à ces inconvénients qu'entend plus particulièrement remédier l'invention, en proposant un dispositif de filtrage des gaz de coupure pour un appareil électrique de coupure d'un courant électrique dans l'air, ce dispositif de filtrage permettant de réduire de façon satisfaisante la température des gaz de coupure générés par cet appareil électrique tout en limitant la pression des gaz de coupure.

A cet effet, l'invention concerne un dispositif de filtrage de gaz de coupure pour un appareil de coupure d'un courant électrique à contacts séparables et comportant une chambre de coupure d'un arc électrique, ce dispositif de filtrage comportant, assemblés entre eux :
- une pièce d'entrée des gaz de coupure, cette pièce d'entrée étant réalisée en matière métallique et comportant :
   - un orifice d'entrée destiné à être connecté fluidiquement avec une sortie de gaz de coupure d'un appareil de coupure d'un courant électrique,
   - un orifice de sortie, et
   - au moins une paroi évasée s'étendant entre les orifices d'entrée et de sortie ;
- un diffuseur de gaz, qui recouvre l'orifice de sortie de la pièce d'entrée, ce diffuseur de gaz présentant une forme plane et comprenant des orifices traversants ;
- un filtre en mousse métallique poreuse, placé en sortie du diffuseur de gaz.

Grâce à l'invention, l'utilisation d'une pièce d'entrée en matière métallique avec des parois évasées permet de canaliser le jet de gaz de coupure lors de sa sortie de la chambre de coupure. Du fait que la pièce est en matière métallique, et non en matière plastique, l'ablation de matière causée par le jet de gaz lors de son passage dans la pièce d'entrée génère moins de gaz que dans les dispositifs de filtrage connus en plastique, ce qui limite l'augmentation de la pression des gaz de coupure.

Le diffuseur permet de répartir le flux de gaz de coupure entrant sur toute la surface du filtre, ce qui augmente l'efficacité du filtrage assuré par ce dernier et évite que le jet de gaz ne soit concentré localement, ce qui pourrait percer le filtre. Enfin, comme le filtre est réalisé en mousse métallique, il assure un refroidissement important tout en occupant un volume réduit, du fait de la porosité élevée de la mousse métallique.

Ainsi, l'association de la pièce d'entrée, du diffuseur de gaz et du filtre permet de refroidir le gaz de coupure en absorbant une quantité d'énergie importante de ce dernier, tout en limitant l'augmentation de pression, le tout avec une architecture compacte.

Selon des aspects avantageux mais non obligatoires de l'invention, un tel dispositif de filtrage peut incorporer une ou plusieurs des caractéristiques suivantes, prises isolément ou suivant toute combinaison techniquement admissible :
- La pièce d'entrée comporte un orifice d'entrée additionnel qui est destiné à être connecté fluidiquement à une sortie d'une chambre de coupure, au moins une des parois de la pièce d'entrée s'étendant depuis cet orifice d'entrée additionnel vers l'orifice de sortie.
- Le diffuseur de gaz comporte une toile d'un tissu métallique.
- La toile de tissu métallique est un tissu reps en acier inoxydable formé par tissage de fils métallique de diamètre supérieur ou égal à 1mm.
- Le diffuseur de gaz comporte un assemblage de plaques métalliques perforées.
- La mousse métallique du filtre présente une porosité supérieure ou égale à 90%.
- La mousse métallique du filtre est réalisée en nickel ou en alliage de nickel chrome.
- La pièce d'entrée est réalisée en acier inoxydable ou en acier nickelé.

Selon un autre aspect, l'invention concerne un appareil de coupure d'un courant électrique, cet appareil comprenant :
- un bloc de coupure contenant :
   - des contacts électriques séparables raccordés à des terminaux d'entrée et de sortie d'un courant électrique et
   - une chambre de coupure d'un arc électrique, pour éteindre un arc électrique formé lors de la séparation des contacts électriques séparables, cette chambre de coupure étant reliée fluidiquement à une sortie de gaz de coupure de l'appareil ;
- un dispositif de filtrage de gaz de coupure connecté fluidiquement à la sortie de gaz de coupure ;
l'appareil de coupure étant caractérisé en ce que le dispositif de filtrage est conforme à ce qui est décrit précédemment.

Selon des aspects avantageux mais non obligatoires de l'invention, un tel appareil peut incorporer la caractéristique suivante : le bloc de coupure comporte une deuxième chambre de coupure comprenant une deuxième sortie des gaz de coupure, l'appareil de coupure comprenant un deuxième dispositif de filtrage disposé à la sortie de la deuxième sortie, les premier et deuxième dispositifs de filtrage étant identiques entre eux, l'orifice d'entrée dudit dispositif de filtrage étant connecté fluidiquement à ladite sortie des gaz de coupure, l'orifice d'entrée additionnel du deuxième dispositif de filtrage étant connecté fluidiquement à ladite deuxième sortie des gaz de coupure.

L'invention sera mieux comprise et d'autres avantages de celle-ci apparaîtront plus clairement à la lumière de la description qui va suivre, d'un mode de réalisation d'un dispositif de filtrage de gaz de coupure donné uniquement à titre d'exemple et faite en référence aux dessins annexés dans lesquels :
- la figure 1 est une représentation schématique, selon une vue en perspective d'une coupe longitudinale d'un appareil de coupure d'un courant électrique comportant un dispositif de filtrage de gaz de coupure selon l'invention ;
- la figure 2 est une représentation schématique, selon une vue extérieure et en perspective, de l'appareil de coupure de la figure 1 ;
- la figure 3 est une représentation schématique, selon une vue éclatée, d'un dispositif de filtrage de gaz de coupure de l'appareil de coupure de la figure 1 ;
- la figure 4 est une représentation schématique d'un boîtier de l'appareil de coupure des figures 1 et 2 comprenant des zones de raccordement pour recevoir le dispositif de filtrage de gaz de coupure de la figure 3.

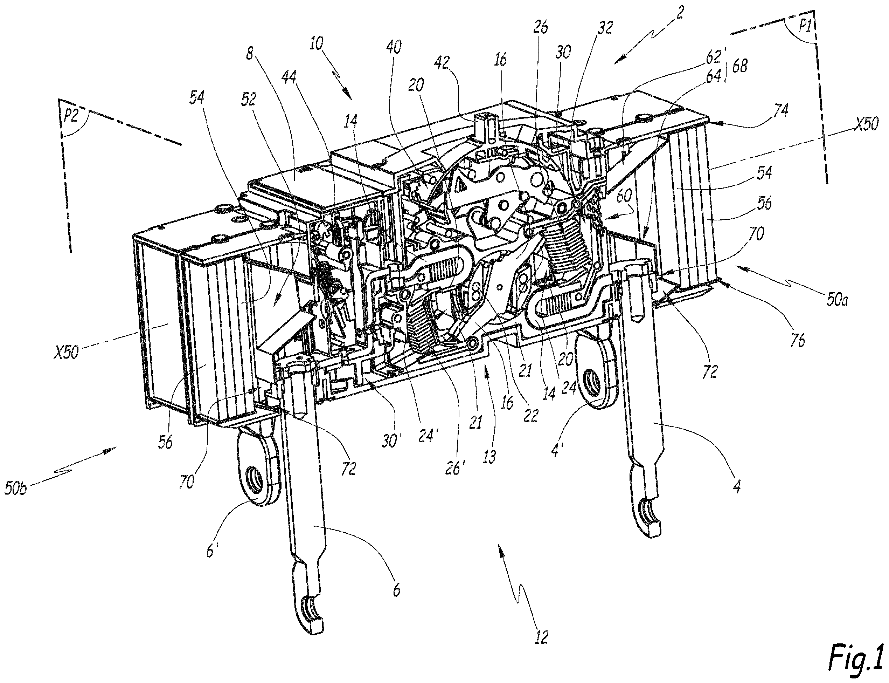

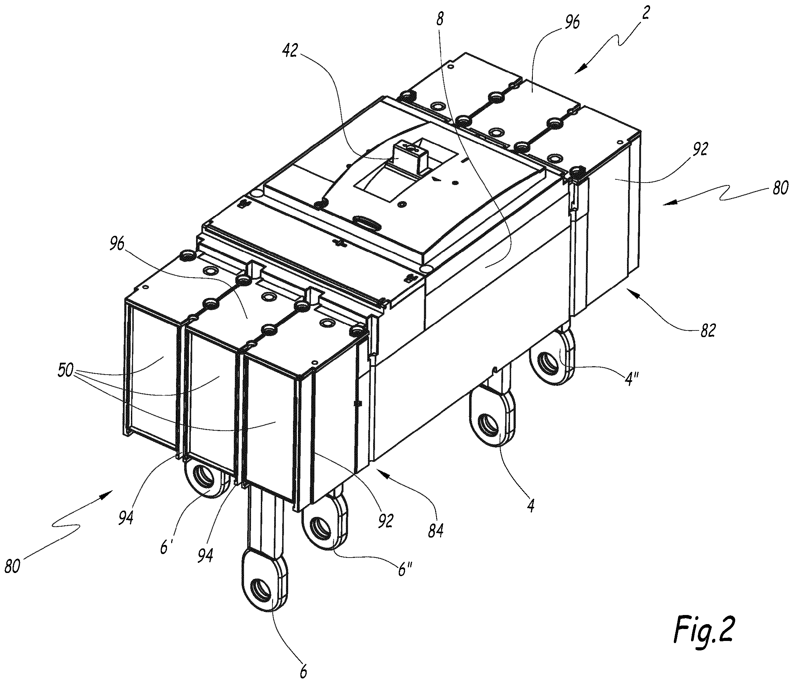

Les figures 1 et 2 représentent un appareil de coupure 2 d'un courant électrique à contacts électriques séparables et à coupure dans l'air.

Dans cet exemple, l'appareil 2 est un disjoncteur multipolaire à basse tension et à haute intensité. Par exemple, l'appareil 2 est adapté pour fonctionner avec des tensions électriques inférieures ou égales à 1000 Volts AC et à 1500 Volts DC et avec des courants électriques de court-circuit d'intensité supérieure ou égale à 1 kA.

L'appareil 2 est ici adapté pour agir sur un courant triphasé et comporte à cet effet trois pôles distincts, chacun associé à une phase du courant électrique.

En variante, l'appareil 2 peut être différent. Il peut s'agir par exemple d'un contacteur ou d'un disjoncteur à courant continu. L'appareil peut aussi comporter un nombre de pôles différents, par exemple être un appareil monopolaire ou tétrapolaire.

L'appareil 2 est destiné à être connecté à un circuit électrique pour en assurer la protection contre des défauts électriques, tels qu'un court-circuit ou une surintensité.

Pour ce faire, l'appareil 2 comporte des terminaux de connexion dits amont 4, 4' et 4", chacun associé à une phase du courant électrique. De même, l'appareil 2 comporte des terminaux de connexion dits aval 6, 6' et 6". Ces terminaux de connexion amont et aval s'étendent ici en saillie par rapport à une face arrière 12 d'un boîtier 8 de l'appareil 2, cette face arrière 12 étant opposée à une face avant 10 du boîtier 8 de l'appareil 2.

On note ici « P1 » un plan géométrique longitudinal de l'appareil 2.

Comme illustré à la figure 1, l'appareil 2 comporte un bloc de coupure 13, aussi nommé ampoule de coupure, contenant des contacts électriques séparables. Ces contacts électriques séparables sont ici réalisés par l'association de contacts électriques fixes 14, solidaires d'un bâti de l'appareil 2, et de contacts électriques mobiles 16 qui sont déplaçables par rapport aux contacts fixes 14, entre un état ouvert et un état fermé. Sur la figure 1, les contacts 14 et 16 sont illustrés dans l'état ouvert.

Dans cet exemple, le bloc de coupure 13 est associé à une des phases du courant et est associé aux terminaux 4 et 6.

L'appareil 2 comporte ici d'autres blocs de coupure, chacun associés à une des autres phases électriques et comportant chacun des contacts électriques séparables. Ces blocs de coupure sont de préférence logés dans des compartiments séparés du boîtier 8. La structure et la fonction de ces blocs de coupure et de leurs contacts séparables sont similaires à celles du bloc de coupure 13, de sorte que la description faite ci-après s'y applique également. Par exemple, l'appareil 2 comporte deux autres blocs de coupure respectivement associés aux deux autres phases du courant électrique et aux terminaux 4' et 6', 4" et 6".

Dans l'état fermé, les contacts mobiles 16 sont en contact électrique avec les contacts fixes 14 et autorisent ainsi la circulation d'un courant électrique au sein de l'appareil 2 entre les terminaux opposés 4 et 6. Dans l'état ouvert, les contacts mobiles 16 sont éloignés à distance des contacts fixes 14 pour empêcher la circulation d'un courant électrique, les contacts 14 et 16 étant ainsi isolés électriquement par l'air ambiant. Le courant électrique est ainsi empêché de circuler entre les terminaux opposés 4 et 6, du moins lorsqu'aucun arc électrique n'est présent.

Les contacts fixes 14 et les contacts mobiles 16 portent ici des pastilles de contact, respectivement notées 20 et 21 et ici réalisées en cuivre, destinées à favoriser une meilleure conductivité électrique entre les contacts 14 et 16 lorsqu'ils sont dans l'état fermé.

Dans le cas présent, les contacts fixes 14 sont au nombre de deux, l'un étant raccordé électriquement au terminal 4, l'autre étant raccordé au terminal 6. Les contacts mobiles 16 sont connectés électriquement entre eux. Ici, ils sont au nombre de deux, chacun étant associé à un contact fixe 14.

Dans cet exemple illustratif, les contacts mobiles 16 sont formés par une unique pièce en un matériau électriquement conducteur, qui est portée par un organe rotatif 22 monté en rotation par rapport au boîtier 8. Les contacts fixes 14 sont ici disposés symétriquement par rapport à l'axe de rotation de l'organe 22.

De façon connue, lorsque deux contacts électriques 14 et 16 se séparent alors qu'un courant électrique circule au travers de l'appareil 2, il apparaît un arc électrique entre ces contacts 14 et 16, par exemple entre les pastilles 20 et 21 correspondantes. Cet arc électrique naît de la rupture d'isolement dans l'air entre les contacts 14 et 16 et est entretenu par ionisation de l'air ambiant. Il en résulte une augmentation de la température et de la pression, car l'arc électrique entraîne à son tour l'ionisation de constituants de l'appareil 2, par exemple l'ionisation des pastilles de contact 20, 21 et/ou des parois du boîtier 8, ce qui donne naissance à un gaz de coupure. L'arc électrique s'accompagne ainsi d'une brusque élévation de la température et de la pression à l'intérieur de l'appareil 2.

A titre d'exemple illustratif, pour un disjoncteur fonctionnant à une tension de 690V et un courant de coupure égal à 100kA, l'énergie de l'arc électrique peut atteindre jusqu'à 100kJ. La pression de gaz de coupure peut atteindre jusqu'à 30 bars. En l'absence de dispositif de filtrage, le gaz de coupure est éjecté en dehors du boîtier 8 avec une température supérieure à 4000°C et une vitesse sonique supérieure à 300m/s.

L'appareil 2 comporte également des chambres de coupure d'arc 24 et 24', qui ont pour fonction d'assurer l'extinction d'un tel arc électrique. Chaque chambre de coupure 24, 24' est ainsi, dans cet exemple, associée à et placée en face d'une zone de contact entre un contact fixe 14 et un contact mobile 16. Par exemple, la chambre de coupure 24 est associée aux contacts électriques 14 et 16 qui sont du côté du terminal amont 4, et la chambre de coupure 24' est associée aux contacts électriques 14 et 16 qui sont du côté du terminal aval 6.

La chambre de coupure 24 comporte un empilement de tôles 26, aussi nommées plaques de séparation d'arc, et un canal 30 d'évacuation des gaz de coupure qui débouche à l'extérieur du boîtier 8 de l'appareil 2 au niveau d'une sortie d'échappement de gaz. Les plaques de l'empilement 26 ont pour fonction d'éteindre l'arc électrique en le fractionnant en une pluralité d'arcs distincts entre les plaques. Le canal d'évacuation 30 a pour fonction d'évacuer le gaz de coupure hors du boîtier de l'appareil 2 vers la sortie de gaz correspondante.

Le canal d'évacuation 30 comporte ici une grille 32 de protection de manière à empêcher l'entrée de corps étrangers à l'intérieur de la chambre de coupure 24, par exemple pour assurer une étanchéité contre la poussière et/ou contre les corps étrangers de diamètre supérieur à 1mm. Cette grille 32 peut toutefois être omise.

En pratique, les gaz de coupure issus de cette chambre de coupure 24 ne peuvent ici s'échapper en dehors de l'appareil 2 que par l'intermédiaire du canal 30. Par exemple, le boîtier 8 est réalisé dans un matériau étanche aux gaz.

En variante, le bloc de coupure 13 peut comporter un nombre différent de chambres de coupure. Le nombre de chambres de coupure est ici choisi en fonction du nombre et de la disposition des contacts fixes 14 et mobiles 16 formant ces contacts séparables. Par exemple, l'appareil 2 peut ne comporter qu'une seule chambre de coupure lorsqu'il comporte seulement un contact fixe 14 et un contact mobile 16 associés à cette phase électrique.

Les chambres de coupure 24 et 24' sont ici similaires. En particulier, la chambre de coupure 24' comporte notamment un empilement 26' et un canal d'évacuation 30' qui sont analogues, respectivement, à l'empilement 26 et au canal d'évacuation 30. Dans cet exemple, les chambres 24 et 24" diffèrent notamment l'une de l'autre par leur position au sein du bloc de coupure et par la configuration spatiale des canaux 30 et 30', comme décrit ci-après.

Dans cet exemple, les canaux 30 et 30' débouchent à l'extérieur du boîtier 8 chacun au moyen d'une sortie, telle qu'une ou plusieurs ouvertures ou orifices, située sur une face, respectivement, supérieure et inférieure du boîtier 8.

Le déplacement des contacts électriques mobiles 16 par rapport aux contacts fixes 14 est assuré au moyen d'un mécanisme de commande 40, qui n'est pas décrit plus en détail dans ce qui suit. Ce mécanisme de commande 40 est ici actionnable manuellement par un opérateur, au moyen d'un levier de commande 42 situé en face avant 10 de l'appareil 2. Le mécanisme 40 est également actionnable automatiquement, par exemple en cas de défaut électrique détecté au moyen d'un déclencheur 44 intégré à l'appareil 2. Par exemple, le déclencheur 44 est un déclencheur thermique et/ou magnétique.

Dans cet exemple, le mécanisme 40 est agencé pour commander le déplacement simultané des contacts électriques mobiles appartenant aux différents blocs de coupure de l'appareil 2.

L'appareil 2 comporte également au moins un dispositif de filtrage 50 qui a pour fonction de refroidir et de dépolluer les gaz de coupure et pour réduire leur pression avant leur évacuation hors de l'appareil 2.

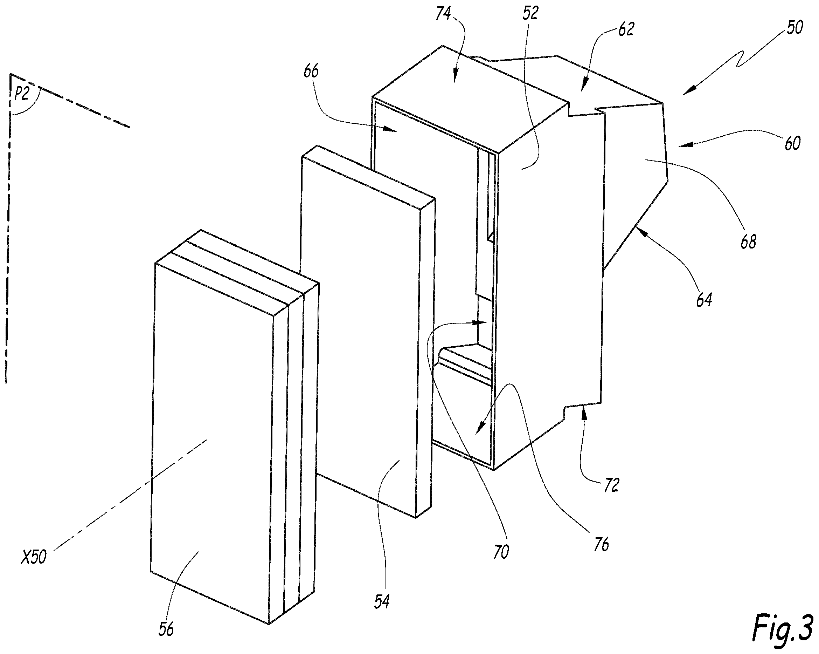

Comme illustré à la figure 3, le dispositif de filtrage 50 comporte une pièce d'entrée 52, un diffuseur de gaz 54 et un filtre en mousse métallique 56. A la figure 3, ces éléments sont illustrés selon une vue éclatée pour faciliter la compréhension. Toutefois, en pratique, ces éléments sont assemblés entre eux pour former le dispositif de filtrage 50.

On note « X50 » un axe longitudinal du dispositif de filtrage 50 et on note « P2 » un plan géométrique transverse du dispositif de filtrage 50.

Par exemple, la pièce d'entrée 52, le diffuseur de gaz 54 et le filtre 56 sont assemblés et alignés entre eux le long de l'axe X50.

Dans cet exemple, chaque bloc de coupure de l'appareil 2 comporte deux dispositifs de filtrage 50, chacun placé en sortie d'une chambre de coupure 24, 24' de ce bloc de coupure, c'est-à-dire ici en sortie du canal d'évacuation 30, 30' correspondant, de manière à recueillir et filtrer les gaz de coupure issus de ce bloc de coupure. En variante, lorsque les blocs de coupure comportent un nombre différent d'orifices de sortie des gaz de coupure, le nombre de dispositifs de filtrage 50 est modifié en conséquence, pour que chaque orifice de sortie des gaz de coupure soit pourvu d'un dispositif de filtrage 50.

A la figure 1, les deux dispositifs de filtrage 50 associés au bloc de coupure précédemment décrit portent les références 50a et 50b, respectivement, de façon à les différencier dans la description qui suit. Dans cet exemple, le dispositif de filtrage 50a est placé en sortie de la chambre de coupure 24 et le dispositif de filtrage 50b est placé en sortie de la chambre de coupure 24'. Plus précisément, les dispositifs 50a et 50b sont placés en sortie des canaux d'évacuation 30 et 30', respectivement.

La pièce d'entrée 52 est ici réalisée en matière métallique, de préférence en acier nickelé. Le matériau métallique peut toutefois être différent, par exemple être de l'acier inoxydable.

La pièce d'entrée 52 comporte un orifice d'entrée 60, dit orifice principal. Cet orifice d'entrée 60 est destiné à être connecté fluidiquement à une sortie de gaz de coupure de l'appareil 2, de préférence de façon étanche, pour autoriser le passage des gaz de coupure depuis la sortie des gaz vers l'intérieur du dispositif de filtrage 50.

Par « connecté fluidiquement », on entend ici que des éléments sont connectés entre eux de manière à autoriser la circulation d'un fluide, tel qu'un gaz, de préférence de façon étanche, c'est-à-dire en limitant les fuites en dehors de ces éléments au niveau de leur connexion.

La pièce d'entrée 52 comporte également un orifice de sortie 66. La pièce d'entrée 52 comporte aussi des parois d'entrée 62, 64 qui s'étendent ici depuis l'orifice d'entrée 60 vers l'orifice de sortie 66.

L'orifice d'entrée 60 présente des dimensions inférieures à celles de l'orifice de sortie 66. Par exemple, la superficie de l'orifice d'entrée 60 n'excède pas celle de l'orifice de gaz de coupure auquel elle est associée. En limitant les dimensions de l'ouverture, on réduit le risque que l'arc électrique puisse s'échapper hors de la chambre de coupure 24, 24' vers le dispositif de filtrage 50, ce qui limite le risque de rebouclage du courant électrique à l'extérieur de l'appareil 2.

Les parois 62, 64 présentent ici une forme évasée qui va en s'élargissant depuis l'orifice d'entrée 60 vers l'orifice de sortie 66.

Dans cet exemple, les parois 62 et 64 définissent en partie une première partie 68 de la pièce 52, cette première partie 68 présentant une forme évasée à la manière d'un entonnoir, qui va en s'élargissant ici le long de l'axe X50, et se terminant par une première ouverture de superficie supérieure à celle de l'ouverture d'entrée 60. Cette première ouverture est ici disposée en regard de l'orifice de sortie 66 et débouche dans cet orifice de sortie 66. Cette première ouverture présente ici des dimensions inférieures à celles de l'orifice de sortie 66. Ici, la première partie 68 s'étend parallèlement à l'axe X50. En variante, la première partie 68 peut présenter une forme différente, par exemple une forme conique.

En outre, la pièce d'entrée 52 comporte optionnellement un orifice d'entrée secondaire 70, aussi nommé orifice d'entrée additionnel. Dans l'exemple illustré, l'orifice additionnel 70 est ménagé sous la première partie 68. La pièce 52 comporte également une paroi 72 inclinée qui s'étend depuis l'orifice additionnel 70 vers l'orifice de sortie 60.

La position et les dimensions de l'orifice d'entrée 60 et, le cas échéant, de l'orifice additionnel 70 sont choisies en fonction de la forme et de l'emplacement des sorties d'échappement de gaz de coupure, comme expliqué dans ce qui suit.

La forme évasée des parois 62, 64 et donc de la première partie 68, ainsi que la forme inclinée de la paroi 72, contribuent à défléchir et orienter, vers le diffuseur de gaz 54, le jet de gaz de coupure lorsque celui-ci pénètre dans la pièce d'entrée 52.

La pièce d'entrée 52 présente également une deuxième partie, en partie délimitée par des parois 74, 76 et par des parois latérales planes, non référencées. La deuxième partie est formée dans le prolongement de la première partie 68. Les parois latérales s'étendent ici depuis la première partie et depuis l'orifice secondaire 70 jusque vers l'orifice de sortie 66.

Dans cet exemple, du fait de la conception de l'appareil 2, les chambres de coupure 24 et 24' et les canaux d'échappement 30, 30' sont disposées différemment et de façon non symétrique. Les canaux d'évacuation 30, 30' débouchent donc à des positions différentes sur des faces opposées du boîtier 8. Par exemple, le canal 30 débouche à l'extérieur du boîtier 8 sur une sortie d'échappement située essentiellement au milieu de la face supérieure, et le canal 30' débouche à l'extérieur du boîtier 8 sur une sortie d'échappement située sur un bord de la face inférieure, notamment à cause de la présence du déclencheur 44 qui l'empêche de déboucher au milieu de la face inférieure.

L'orifice entrée additionnel 70 est ici destiné à être connecté fluidiquement à la sortie du canal 30', tandis que l'orifice d'entrée 60 est ici destiné à être connecté fluidiquement à la sortie du canal 30. Ici, l'orifice additionnel du dispositif de filtrage 50a débouche sur une partie du boîtier 8 et de reçoit pas de gaz de coupure. De façon analogue, l'orifice d'entrée 60 du dispositif de filtrage 50b débouche sur une paroi du boîtier 8 et ne reçoit pas de gaz de coupure.

Ainsi, un même modèle de dispositif de filtrage 50 peut être associé à des sorties de gaz placées à des emplacements différents de l'appareil 2 et ayant des orientations et/ou des géométries différentes. Il n'est donc pas nécessaire d'avoir recours, au sein d'un même appareil de coupure 2, à des dispositifs de filtrage ayant des géométries différentes. Cela simplifie donc la fabrication de l'appareil 2 à l'échelle industrielle, tant en termes de coût que de gestion des pièces nécessaires à la fabrication.

En variante, la pièce 52 peut être différente. En particulier, l'orifice d'entrée secondaire 70 peut être omis. Cela est par exemple le cas lorsque le bloc de coupure de l'appareil 2 ne comporte qu'une seule chambre de coupure 24. Le nombre et la forme des parois 62, 64 peut également être différent.

Selon d'autres variantes, des dispositifs de filtration 50a et 50b différents l'un de l'autre peuvent être utilisés au sein de l'appareil 2, par exemple chacun adaptés à la position et/ou à la forme des sorties de gaz de coupure. Là encore, l'orifice d'entrée secondaire 70 peut être omis, lorsque la pièce d'entrée 52 est adaptée à la forme et à la position de la sortie des gaz de coupure.

Le diffuseur 54 a pour fonction de favoriser la répartition du flux de gaz de coupure entrant dans la pièce 52 sur toute la surface d'entrée du filtre 56, notamment pour éviter que le jet de gaz ne se concentre totalement sur une zone précise du filtre 56, ce qui pourrait l'endommager.

De façon préférentielle, le diffuseur 54 comporte une couche, ou toile, de tissu métallique formé par tissage de fils métalliques. De préférence, ces fils métalliques sont de forte épaisseur, par exemple de diamètre supérieur à 1mm. Avantageusement, le tissu présente un maillage de type « reps ».

Cette couche de tissu présente une forme plane et s'étend ici parallèlement au plan P2 dans l'orifice de sortie 66 sur toute la superficie de la section transversale de l'orifice de sortie 66. Ainsi, le jet de gaz entrant doit traverser le diffuseur 54 pour atteindre le filtre 56. Les fils tissés entre eux délimitent ainsi une pluralité d'orifices traversants qui permettent au gaz de coupure de traverser la toile de tissu métallique en cheminant au travers de celle-ci. Par exemple, la couche de tissu est tendue entre les parois 74 et 76 de la pièce d'entrée 52.

De façon avantageuse, le tissu métallique est ici réalisé en acier inoxydable, préférentiellement de type « AISI 316L », avec des fils de trame de diamètre supérieur ou égal à 1,4mm et des fils de chaîne de diamètre supérieur ou égal à 2mm, de préférence avec un tissage présentant une structure d'armure unie.

En variante, le tissu métallique reps peut être réalisé différemment, par exemple avec des diamètres de fils différents et/ou une armure différente. Les fils formant le tissu peuvent être réalisés en un acier inoxydable de type « AISI 304L ».

Selon un autre mode de réalisation, le diffuseur 54 comporte un assemblage de plaques, ou tôles, métalliques perforées d'orifices. Ces plaques sont disposées dans l'orifice de sortie 66 de manière à recouvrir l'orifice de sortie 66. Elles jouent un rôle analogue au tissu métallique précédemment décrit. Par exemple, ces plaques métalliques sont disposées parallèlement entre elles, ici selon le plan P2, et sont espacées les unes des autres selon l'axe X50. De préférence, les perforations sont ménagées sur ces plaques en étant disposées de façon désalignée par rapport aux perforations des plaques immédiatement voisines, c'est-à-dire que ces perforations ne sont pas situées en face des perforations des plaques immédiatement voisines et ne sont pas alignées avec ces perforations des plaques immédiatement voisines. Cela évite que le jet de gaz de coupure ne traverse le diffuseur 54 en ligne droite et, au contraire, favorise le cheminement et la répartition spatiale du gaz de coupure au travers du diffuseur 54.

Le filtre 56 comporte une couche de mousse métallique poreuse, placée en sortie du diffuseur de gaz 54, par exemple en étant accolée à celui-ci et en recouvrant une face de sortie de celui-ci sur toute sa surface. En variante, le filtre 56 comporte un empilement de plusieurs telles couches de mousse métallique accolées entre elles. Par exemple, la ou les couches de mousse métallique sont disposées parallèlement au plan P2 entre les parois 74 et 76 de la pièce d'entrée 52. De préférence, la ou les couches de mousse sont montées de façon étanche, pour éviter que le gaz de coupure provenant du diffuseur 54 ne puisse s'échapper au dehors du diffuseur 50 sans passer par le filtre 56.

Cette mousse métallique présente une porosité élevée, par exemple supérieure ou égale à 90% et, de préférence, supérieure ou égale à 95%. La porosité est ici définie comme étant le rapport entre, d'une part, le volume des évidements contenus à l'intérieur d'un volume de mousse et, d'autre part, ledit volume de mousse.

La mousse métallique présente une structure alvéolaire poreuse formée d'une matière métallique solide. De fait, elle présente une surface d'échange élevée, par exemple supérieure ou égale à 1500m² par mètre cube de mousse et, de préférence, supérieure ou égale à 2500m² par mètre cube ou, encore plus préférentiellement, supérieure ou égale à 2800m² par mètre cube.

Les porosités de la mousse métallique débouchent à l'extérieur de la couche de mousse, par exemple au niveau de faces extérieures de cette couche. Ainsi, les gaz de coupure sortant du diffuseur 54 peuvent entrer dans la couche 56 et traverser celle-ci pour ensuite en ressortir à l'extérieur du dispositif de filtrage 50.

De préférence, la mousse métallique est réalisée en nickel. En variante, la mousse 56 peut être réalisée en un alliage de nickel-chrome.

L'association de la pièce d'entrée 52, du diffuseur de gaz 54 et du filtre 56 permet de refroidir le gaz de coupure en absorbant une quantité d'énergie importante de ce dernier, tout en limitant l'ablation de matière par le gaz de coupure. Or, dans les dispositifs de filtrage connus, l'augmentation de pression typiquement observée est en grande partie causée par l'ablation de matière par le gaz de coupure chaud, particulièrement lorsque ces dispositifs sont en plastique. En limitant l'ablation de matière, on limite l'augmentation de la pression typiquement observée dans les dispositifs connus. Quand bien même une telle ablation se produit, l'augmentation de pression est moins importante, car les matériaux métalliques utilisés sont moins gazogènes que les matériaux plastiques des dispositifs connus, c'est-à-dire qu'ils dégagent moins de gaz lorsqu'ils sont exposés au flux de gaz de coupure chaud.

Grâce à l'invention, les gaz de coupure sortant du dispositif de filtrage 50 sont refroidis de façon satisfaisante, et leur pression est réduite par rapport aux dispositifs de filtrage connus. Par exemple, les inventeurs ont déterminé que, dans certains cas, la pression des gaz de coupure est quatre fois moins importante, voire cinq fois moins importante, que la pression des gaz de coupure en sortie de dispositifs de filtrage connus.

Du fait des performances du dispositif de filtrage 50, le fonctionnement de l'appareil 2 est plus sûr. Il peut être utilisé en milieu confiné en limitant le risque d'endommager son environnement lors d'une coupure du courant.

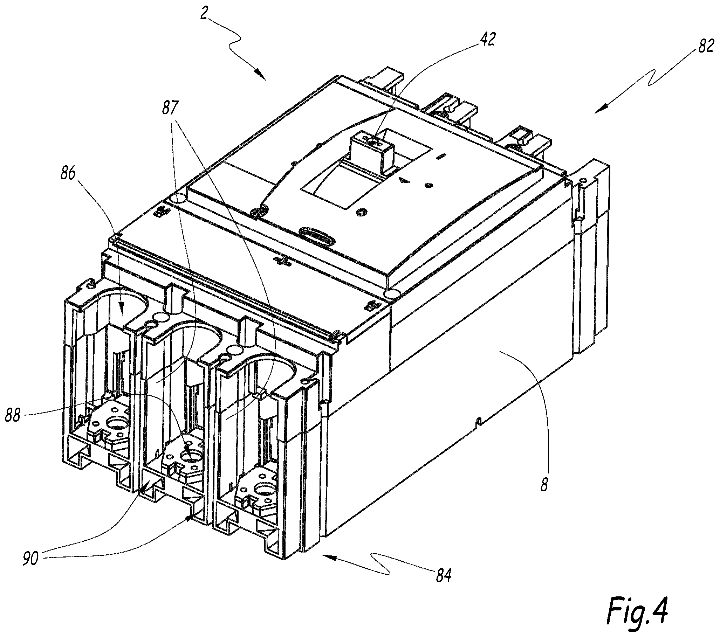

Dans ce mode de réalisation, comme illustré aux figures 2 et 4, les dispositifs de filtrage 50 de l'appareil 2 sont groupés au sein d'ensembles de filtrage 80, qui regroupent chacun plusieurs dispositifs de filtrage 50 associés à différents blocs de coupure de l'appareil 2.

Les sorties de gaz de coupure de l'appareil 2 sont ici situées sur une face supérieure du boîtier 8 au niveau d'une zone supérieure 82, et sur une face inférieure du boîtier 8 au niveau d'une zone inférieure 84. L'appareil 2 comporte donc deux ensembles de filtrage 80, l'un associé aux sorties placées sur la zone 82 et fixées au boîtier 8 sur cette zone 82 et l'autre associé aux sorties placées sur la zone 84 et fixé au boîtier 8 sur cette interface 84.

Les ensembles de filtrage 80 sont ici identiques et comportent chacun trois dispositifs de filtrage 50, de préférence identiques entre eux.

Comme illustré à la figure 4, la zone inférieure 84 comporte trois logements 86, ou cavités, chacun ménagé à la base du boîtier 8 dans l'alignement d'un des blocs de coupure. Les logements 86 sont séparés les uns des autres par des murs de séparation 87, ici verticaux et s'étendant perpendiculairement à la face inférieure, ici parallèlement au plan P1. Ces murs de séparation 87 sont ici formés d'un seul tenant avec le boîtier 8.

Chacun de ces logements 86 renferme également une interface 88 de connexion, pour recevoir une extrémité d'un terminal de connexion 6, 6', 6". Chaque interface 88 est ici pourvue d'un alésage, par exemple taraudé, destiné à recevoir une vis de fixation qui maintient l'extrémité de terminal 6, 6', 6" correspondant. Cette interface 86 comporte en outre une enveloppe plastique sur laquelle est formé l'alésage et qui entoure un prolongement du contact fixe 14. Ainsi, lorsque le terminal 6, 6', 6" est reçu dans l'interface 88 correspondante, il est en contact électrique avec ce prolongement du contact fixe 14.

La zone 84 comporte également des orifices 90 qui sont en liaison avec le canal 30' et qui forment ensemble une sortie des gaz de coupure issus de la chambre de coupure 24'. Les orifices 90 sont ici placés au niveau d'un bord arrière de la zone 84.

Ces orifices 90, ainsi que le canal 30' qui se prolonge jusqu'à ces orifices 90, sont séparés de l'alésage ménagé sur l'interface 86 et du contact fixe 14 par des parois internes du boîtier 8 électriquement isolantes et étanches au gaz de coupure. De cette manière, les gaz de coupure peuvent sortir du boîtier 8 par cette sortie sans pour autant entrer en contact électrique avec les terminaux de connexion 6, 6', 6". On évite ainsi un risque de rebouclage du courant au sein de l'appareil 2.

L'ensemble 80 comporte en outre une pièce de séparation 92 qui est montée sur la face inférieure au niveau de la zone 84. Cette pièce 92 comporte notamment des parois de séparation 94 qui prolongent les murs de séparation 87, délimitant ainsi des logements dans le prolongement des logements 86. La pièce 92 comporte également un couvercle 96, rapporté sur sa face avant de manière à masquer et protéger les logements 86.

Un dispositif de filtrage 50 est reçu dans chacun de ces logements. La pièce d'entrée 52 de chacun de ces dispositifs de filtrage 50 est plaquée contre la base du boîtier 8 au niveau de la zone 84 en étant disposée de telle sorte que l'orifice d'entrée secondaire 70 soit placé en face des orifices 90 correspondants.

La zone supérieure 82 est réalisée de façon analogue, si ce n'est qu'ici, les interfaces 88 permettent la connexion des terminaux 4, 4' et 4". En outre, ici, le canal d'évacuation 30 présente une géométrie différente de celle du canal d'évacuation 30' et débouche à un emplacement distinct et distant de l'interface 86. La pièce 52 de chacun des dispositifs de filtrage 50 est plaquée contre la base du boîtier 8 au niveau de la zone 82 en étant disposée de telle sorte que l'orifice d'entrée principal 60 soit placé en face du débouché du canal d'évacuation 30. Les orifices 90 peuvent alors être omis.

Les modes de réalisation et les variantes envisagés ci-dessus peuvent être combinés entre eux pour générer de nouveaux modes de réalisation.

## Revendications

1. Dispositif de filtrage (50, 50a, 50b) de gaz de coupure pour un appareil de coupure (2) d'un courant électrique à contacts séparables et comportant une chambre de coupure d'un arc électrique, ce dispositif de filtrage (50, 50a, 50b) étant **caractérisé en ce qu'**il comporte, assemblés entre eux :
- une pièce d'entrée (52) des gaz de coupure, cette pièce d'entrée (52) étant réalisée en matière métallique et comportant :
• un orifice d'entrée (60) destiné à être connecté fluidiquement avec une sortie de gaz de coupure d'un appareil de coupure (2) d'un courant électrique,
• un orifice de sortie (66), et
• au moins une paroi évasée (62, 64, 72) s'étendant entre les orifices d'entrée et de sortie ;
- un diffuseur de gaz (54), qui recouvre l'orifice de sortie (66) de la pièce d'entrée (52), ce diffuseur de gaz présentant une forme plane et comprenant des orifices traversants ; **caractérisé par**
- un filtre (56) en mousse métallique poreuse, placé en sortie du diffuseur de gaz (54).

2. Dispositif de filtrage (50, 50a, 50b) selon la revendication 1, **caractérisé en ce que** la pièce d'entrée (52) comporte un orifice d'entrée additionnel (70) qui est destiné à être connecté fluidiquement à une sortie d'une chambre de coupure (24'), au moins une des parois (72) de la pièce d'entrée s'étendant depuis cet orifice d'entrée additionnel (70) vers l'orifice de sortie (66).

3. Dispositif de filtrage (50, 50a, 50b) selon l'une quelconque des revendications précédentes, **caractérisé en ce que** le diffuseur de gaz (54) comporte une toile d'un tissu métallique.

4. Dispositif de filtrage (50, 50a, 50b) selon la revendication 3, **caractérisé en ce que** la toile de tissu métallique est un tissu reps en acier inoxydable formé par tissage de fils métallique de diamètre supérieur ou égal à 1mm.

5. Dispositif de filtrage (50, 50a, 50b) selon la revendication 1 ou 2, **caractérisé en ce que** le diffuseur de gaz (54) comporte un assemblage de plaques métalliques perforées.

6. Dispositif de filtrage (50, 50a, 50b) selon l'une quelconque des revendications précédentes, **caractérisé en ce que** la mousse métallique du filtre (56) présente une porosité supérieure ou égale à 90%.

7. Dispositif de filtrage (50, 50a, 50b) selon l'une quelconque des revendications précédentes, **caractérisé en ce que** la mousse métallique du filtre (56) est réalisée en nickel ou en alliage de nickel chrome.

8. Dispositif de filtrage (50, 50a, 50b) selon l'une quelconque des revendications précédentes, **caractérisé en ce que** la pièce d'entrée (52) est réalisée en acier inoxydable ou en acier nickelé.

9. Appareil de coupure (2) d'un courant électrique, cet appareil (2) comprenant :
- un bloc de coupure contenant :
• des contacts électriques séparables (14, 16) raccordés à des terminaux d'entrée (4 ; 4' ; 4") et de sortie (6 ; 6' ; 6") d'un courant électrique et
• une chambre de coupure (24, 24') d'un arc électrique, pour éteindre un arc électrique formé lors de la séparation des contacts électriques séparables (14, 16), cette chambre de coupure étant reliée fluidiquement à une sortie de gaz de coupure de l'appareil (2) ;
- un dispositif de filtrage (50, 50a, 50b) de gaz de coupure connecté fluidiquement à la sortie de gaz de coupure ;
l'appareil de coupure (2) étant **caractérisé en ce que** le dispositif de filtrage (50, 50a, 50b) est conforme à l'une quelconque des revendications précédentes.

10. Appareil de coupure (2) selon la revendication 9, **caractérisé en ce que** le bloc de coupure comporte une deuxième chambre de coupure (24') comprenant une deuxième sortie des gaz de coupure, l'appareil de coupure (2) comprenant un deuxième dispositif de filtrage (50b) disposé à la sortie de la deuxième sortie, les premier et deuxième dispositifs de filtrage (50a, 50b) étant conformes à la revendication 2 et étant identiques entre eux, l'orifice d'entrée (60) dudit dispositif de filtrage (50a) étant connecté fluidiquement à ladite sortie des gaz de coupure, l'orifice d'entrée additionnel (70) du deuxième dispositif de filtrage (50b) étant connecté fluidiquement à ladite deuxième sortie des gaz de coupure.

## Patentansprüche

1. Vorrichtung (50, 50a, 50b) zum Filtern von Schaltgas für eine Abschaltanlage (2) für elektrischen Strom, mit trennbaren Kontakten und umfassend eine Löschkammer für einen Lichtbogen, wobei diese Filtervorrichtung (50, 50a, 50b) **dadurch gekennzeichnet ist, dass** sie miteinander zusammengesetzt Folgendes umfasst:
- ein Eingangsteil (52) für die Schaltgase, wobei dieses Eingangsteil (52) aus metallischem Material hergestellt ist und umfasst:
• eine Einlassöffnung (60), die dazu vorgesehen ist, fluidisch mit einem Schaltgasauslass einer Schaltanlage (2) für elektrischen Strom verbunden zu werden,
• eine Auslassöffnung (66) und
• mindestens eine Bördelwand (62, 64, 72), die sich zwischen der Einlassöffnung und der Auslassöffnung erstreckt;
- einen Gasdiffusor (54), der die Auslassöffnung (66) des Einlassteils (52) abdeckt, wobei dieser Gasdiffusor eine flache Form aufweist und Durchgangsöffnungen umfasst;
**gekennzeichnet durch**
- einen Filter (56) aus porösem Metallschaum, der am Ausgang des Gasdiffusors (54) angeordnet ist.

2. Filtervorrichtung (50, 50a, 50b) nach Anspruch 1, **dadurch gekennzeichnet, dass** das Eingangsteil (52) eine zusätzliche Eingangsöffnung (70) aufweist, die dazu vorgesehen ist, mit einem Ausgang einer Schaltkammer (24') fluidisch verbunden zu werden, wobei sich zumindest eine der Wände (72) des Einlassteils von dieser zusätzlichen Einlassöffnung (70) zu der Auslassöffnung (66) erstreckt.

3. Filtervorrichtung (50, 50a, 50b) nach einem der vorangegangenen Ansprüche, **dadurch gekennzeichnet, dass** der Gasdiffusor (54) ein Netz aus einem Metallgewebe aufweist.

4. Filtervorrichtung (50, 50a, 50b) nach Anspruch 3, **dadurch gekennzeichnet, dass** das Netz aus Metallgewebe ein Ripsgewebe aus Edelstahl ist, das durch Weben von Draht mit einem Durchmesser von 1 mm oder mehr gebildet wird.

5. Filtervorrichtung (50, 50a, 50b) nach Anspruch 1 oder 2, **dadurch gekennzeichnet, dass** der Gasdiffusor (54) eine Lochblechanordnung aufweist.

6. Filtervorrichtung (50, 50a, 50b) nach einem der vorangegangenen Ansprüche, **dadurch gekennzeichnet, dass** der Metallschaum des Filters (56) eine Porosität von 90% oder größer aufweist.

7. Filtervorrichtung (50, 50a, 50b) nach einem der vorangegangenen Ansprüche, **dadurch gekennzeichnet, dass** der Metallschaum des Filters (56) aus Nickel oder einer Nickel-Chrom-Legierung besteht.

8. Filtervorrichtung (50, 50a, 50b) nach einem der vorangegangenen Ansprüche, **dadurch gekennzeichnet, dass** der Einlassteil (52) aus Edelstahl oder vernickeltem Stahl besteht.

9. Vorrichtung (2) zum Abschalten eines elektrischen Stroms, wobei diese Vorrichtung (2) umfasst:
- einen Schaltblock, der aufweist:
• trennbare elektrische Kontakte (14, 16), die an Eingangs klemmen (4; 4'; 4") und Ausgangsklemmen (6; 6'; 6") eines elektrischen Stroms angeschlossen sind, und
• eine Löschkammer (24, 24') für einen Lichtbogen, um einen während der Trennung der trennbaren elektrischen Kontakte (14, 16) gebildeten Lichtbogen zu löschen, wobei diese Löschkammer fluidisch mit einem Schaltgasauslass der Vorrichtung (2) verbunden ist;
- eine Schaltgasfiltervorrichtung (50, 50a, 50b), die fluidisch mit dem Schaltgasauslass verbunden ist;
wobei die Abschaltvorrichtung (2) **dadurch gekennzeichnet ist, dass** die Filtervorrichtung (50, 50a, 50b) einer gemäß den vorhergehenden Ansprüche entspricht.

10. Abschaltvorrichtung (2) nach Anspruch 9, **dadurch gekennzeichnet, dass** der Schaltblock eine zweite Schaltkammer (24') mit einem zweiten Schaltgasauslass aufweist, wobei die Abschaltvorrichtung (2) eine zweite Filtervorrichtung (50b) aufweist, die an dem Ausgang des zweiten Auslasses angeordnet ist, wobei die erste und zweite Filtervorrichtung (50a, 50b) einer gemäß Anspruch 2 entsprechen und miteinander identisch sind, wobei die Einlassöffnung (60) der Filtervorrichtung (50a) mit dem Schaltgasauslass fluidisch verbunden ist, wobei die zusätzliche Einlassöffnung (70) der zweiten Filtervorrichtung (50b) fluidisch mit dem zweiten Schaltgasauslass verbunden ist.

## Claims

1. Filtering device (50, 50a, 50b) for filtering cut-off gases for an electric current cut-off apparatus (2) having separable contacts and comprising an electric arc extinction chamber, the filtering device (50, 50a, 50b) being **characterised in that** it comprises, assembled together:
- an inlet part (52) for the cut-off gases, the inlet part (52) being made of metal material and comprising:
• an inlet orifice (60) which is to be fluidically connected to a cut-off gas outlet of an electric current cut-off apparatus (2),
• an outlet orifice (66), and
• at least one flared wall (62, 64, 72) extending between the inlet and outlet orifices;
- a gas diffuser (54) which covers the outlet orifice (66) of the inlet part (52), the gas diffuser having a planar form and comprising through-orifices; **characterised by**
- a filter (56) made of porous metal foam, placed at the outlet of the gas diffuser (54).

2. Filtering device (50, 50a, 50b) according to claim 1, **characterised in that** the inlet part (52) comprises an additional inlet orifice (70) which is to be fluidically connected to an outlet of an extinction chamber (24'), at least one of the walls (72) of the inlet part extending from the additional inlet orifice (70) to the outlet orifice (66).

3. Filtering device (50, 50a, 50b) according to any one of the preceding claims, **characterised in that** the gas diffuser (54) comprises a cloth of a metal fabric.

4. Filtering device (50, 50a, 50b) according to claim 3, **characterised in that** the cloth of metal fabric is a rep fabric made of stainless steel, formed by weaving metal threads having a diameter greater than or equal to 1 mm.

5. Filtering device (50, 50a, 50b) according to claim 1 or 2, **characterised in that** the gas diffuser (54) comprises an assembly of perforated metal plates.

6. Filtering device (50, 50a, 50b) according to any one of the preceding claims, **characterised in that** the metal foam of the filter (56) has a porosity greater than or equal to 90%.

7. Filtering device (50, 50a, 50b) according to any one of the preceding claims, **characterised in that** the metal foam of the filter (56) is made of nickel or of nickel-chromium alloy.

8. Filtering device (50a, 50b, 50c) according to any one of the preceding claims, **characterised in that** the inlet part (52) is made of stainless steel or of nickel-plated steel.

9. Electric current cut-off apparatus (2), the apparatus (2) comprising:
- a cut-off unit containing:
• separable electrical contacts (14, 16) connected to electric current input (4; 4'; 4") and output (6; 6'; 6") terminals, and
• an electric arc extinction chamber (24, 24') for extinguishing an electric arc formed when the separable electrical contacts (14, 16) are separated, the extinction chamber being fluidically connected to a cut-off gas outlet of the apparatus (2);
- a filtering device (50, 50a, 50b) for filtering cut-off gases which is fluidically connected to the cut-off gas outlet;
the cut-off apparatus (2) being **characterised in that** the filtering device (50, 50a, 50b) is in accordance with any one of the preceding claims.

10. Cut-off apparatus (2) according to claim 9, **characterised in that** the cut-off unit comprises a second extinction chamber (24') comprising a second cut-off gas outlet, the cut-off apparatus (2) comprising a second filtering device (50b) arranged at the outlet of the second outlet, the first and second filtering devices (50a, 50b) being in accordance with claim 2 and being identical to one another, the inlet orifice (60) of said filtering device (50a) being fluidically connected to said cut-off gas outlet, the additional inlet orifice (70) of the second filtering device (50b) being fluidically connected to said second cut-off gas outlet.
